# EUROPEAN PATENT APPLICATION

(11) **EP 4 050 482 A1**
(43) Date of publication of application: **31.08.2022**
(21) Application number: 21798259.4
(22) Date of filing: 29.01.2021
(51) Int. Cl.: G06F 9/50

(54) **RESOURCE DEPLOYMENT SYSTEM AND METHOD BASED ON CLOUD COST**

(30) Priority: 28.12.2020 CN 202011586107
(71) Applicant: KUYUN (SHANGHAI) INFORMATION TECHNOLOGY CO., LTD., Shanghai 200120 (CN)
(72) Inventor: The designation of the inventor has not yet been filed
(74) Representative: Dr. Gassner & Partner mbB
(86) International application number: PCT/CN2021/074310
(87) International publication number: WO 2022/141727

(57) **Abstract**

The disclosure provides a cloud cost-based resource deployment system and method. The deployment system includes a dynamic deployment strategy module, a resource life cycle management module, and an automatic resource operation and maintenance module. The dynamic deployment strategy module automatically analyzes and combines resource deployment schemes according to input parameter. Based on the resource life cycle management module, deployment is implemented. The resource life cycle management module docks with Application Program Interface (API) of various public clouds, and internally provides standardized and unified interfaces. According to the resource deployment schemes provided by the dynamic deployment strategy module, the creation, state synchronization and deletion of resources are realized in a manner of resource arrangement. The automatic resource operation and maintenance module modifies the resources in real time through the public cloud API and a manner of remotely connecting to infrastructure resources. According to the disclosure, unified and efficient management on a plurality of public clouds is performed. For cloud resources, deployment strategy can be automatically adjusted for different operation systems, so that the public clouds can be efficiently used with a low cost.

## Description

### Technical Field

The disclosure relates to the technical field of cloud computing, and in particular, to a cloud cost-based resource deployment system and method.

### Background

At present, under the promotion of market demands for accelerating the implementation of cloud computing, more and more enterprises select infrastructures on a public cloud to provide support for their own service systems. Complex and diverse demands for cloud mainly face the following challenges: (1) Unplanned blind use: service demands promote information technology (IT) personnel to open various public cloud resources, causing more repetitive work and easy mistake making due to manual configuration. (2) Large maintenance difficulty under a multi-cloud scene: under the multi-cloud scene, an IT team needs to manage resources under a plurality of consoles, and low working efficiency is caused due to a plurality of pages and the use of tools. (3) Resource waste: other than a local computer room, for single users, a resource pool theoretically provided by the public cloud is almost infinite and can be immediately used as soon as an application is proposed. The resource pool can be released after being used. Therefore, waste can be avoided by fully utilizing these cloud features.

Based on the above, a solution needs to be proposed, to perform unified and efficient management on a plurality of public clouds. For cloud resources, deployment strategy can be automatically adjusted for different operation systems, so that the public clouds can be efficiently used with a low cost.

### Summary

In view of the above, the disclosure provides a cloud cost-based resource deployment system and method. The following technical solutions are provided.

On the one hand, the disclosure provides a cloud cost-based resource deployment system. The system includes a resource life cycle management module, an automatic resource operation and maintenance module, and a dynamic deployment strategy module. The dynamic deployment strategy module automatically analyzes and combines resource deployment schemes according to requirements inputted by an external application. Based on the resource life cycle management module, deployment is implemented. The resource life cycle management module docks with Application Program Interfaces (APIs) of various public clouds and internally provides standardized and unified interfaces. According to the resource deployment schemes provided by the dynamic deployment strategy module, the creation, state synchronization and deletion of resources are realized in a manner of resource arrangement. The automatic resource operation and maintenance module modifies the resources in real time through the public cloud API and a manner of remotely connecting to infrastructure resources.

Further, after the dynamic deployment strategy module receives a Central Processing Unit (CPU), memory requirements and a specified computing type of a public cloud virtual machine proposed by the external application. A required model and a corresponding quantity are analyzed according to model list information provided by a public cloud obtained regularly and synchronously.

Further, a dynamic deployment strategy of the dynamic deployment strategy module includes implementing an automatic capacity expansion strategy or an automatic capacity reduction strategy according to telescoping requirements of an application public cloud virtual machine cluster.

Further, the automatic capacity expansion strategy of the dynamic deployment strategy module includes: receiving, by the dynamic deployment strategy module, an input resource application request, proposing a resource deployment scheme according to the request, calculating a node model required to be increased and a corresponding quantity, implementing infrastructure creation by using the resource life cycle management module, and completing cluster expansion by means of the automatic resource operation and maintenance module.

Further, the automatic capacity reduction strategy of the dynamic deployment strategy module includes: regularly scanning, by the dynamic deployment strategy module, a free resource, determining deletion time of the public cloud virtual machine by monitoring specific indexes of a public cloud virtual machine cluster, to timely release a resource related to the public cloud virtual machine.

Further, the resource life cycle management module takes various resources provided by a public cloud as a minimum management unit, to explicitly or implicitly realize a dependence relationship between the various resources, so as to safely and orderly create and delete the required resource. A specified resource deployment requirement is taken as an input. An entire set of infrastructures is stored in the resource deployment system in a form of code and configuration, to form the reuse of the deployment scheme.

Further, the resource life cycle management module invokes an API for creating a resource at a resource level of a cloud platform, independently tracks states of various resources, and continuously processes the follow-up resources in case of ensuring that a dependent resource has been successfully created.

Further, the automatic resource operation and maintenance module classifies various service requirements, implements reentrant logic units, and uses the corresponding logic units for resources in different roles, so as to realize real-time modification and environment deployment of the resources.

Further, the automatic resource operation and maintenance module utilizes an internal network of the public cloud to perform document transmission based on public cloud object storage.

On the other hand, the disclosure provides a cloud cost-based resource deployment method. The method is applied to the above cloud computing-based adaptive storage layering system. The method includes the following step(s).

At step 1, an external application proposes an application cluster application to a dynamic deployment strategy module.

At step 2, a dynamic deployment strategy module automatically analyzes and combines a resource deployment scheme according to a requirement of step 1.

At step 3, a resource life cycle management module implements the resource deployment scheme of the dynamic deployment strategy module, and docks with a cloud platform to implement resource creation, capacity expansion and capacity reduction of resource deployment.

At step 4, an automatic resource operation and maintenance module performs real-time modification and environment deployment on a resource according to a modification requirement during the operation of the resource.

On the other hand, the disclosure provides a cloud cost-based resource deployment method. The method includes the following operation(s).

A resource deployment scheme is automatically analyzed and combined according to a requirement inputted by an external application.

Based on the resource deployment scheme, the creation, state synchronization and deletion of a public cloud service provider resource is implemented in a manner of resource arrangement.

The method further includes the following operation.

The resource is modified in real time through public cloud API and a manner of remotely connecting to an infrastructure resource.

Further, the operation of automatically analyzing and combining the resource deployment scheme according to the requirement inputted by the external application includes the following operations.

The requirement inputted by the application is received, and includes any one or more of CPU and memory requirements.

The requirement is calculated based on a specified computing type to obtain the resource deployment scheme. The resource deployment scheme includes a model and a corresponding quantity corresponding to the requirement.

Further, a free resource is regularly scanned. Deletion time of a public cloud virtual machine is determined by monitoring specific indexes of a public cloud virtual machine cluster, to timely release a resource related to the public cloud virtual machine.

Further, the resource deployment scheme is proposed according to a request, and a node model required to be added and a corresponding quantity are calculated.

Infrastructure creation is implemented based on the node model and the corresponding quantity. Cluster expansion is completed by using an automatic resource operation and maintenance module.

On the other hand, the disclosure provides a cloud cost-based resource deployment device. The device includes a dynamic deployment strategy module and a resource life cycle management module.

The dynamic deployment strategy module is configured to automatically analyze and combine a resource deployment scheme according to a requirement inputted by an external application.

The resource life cycle management module is configured to realize the creation, state synchronization and deletion of a public cloud service provider resource in a manner of resource arrangement based on the resource deployment scheme.

On the other hand, the disclosure provides a readable storage medium. The readable storage medium stores a computer program. The method possibly designed in various aspects of the disclosure is implemented when the computer program is performed by a processor.

On the other hand, the disclosure provides an electronic device. The electronic device includes at least one processor and a memorizer in communication connection with the at least one processor. The memorizer stores a computer program capable of being performed by the at least one processor. The computer program is performed by the at least one processor, to cause the at least one processor to perform the method possibly designed in various aspects of the disclosure.

The disclosure provides a cloud cost-based resource deployment system and method. Unified and efficient management on a plurality of public clouds is performed. For cloud resources, deployment strategy can be automatically adjusted for different operation systems, so that the public clouds can be efficiently used with a low cost. Economic and efficient resource deployment schemes are provided under a multi-cloud scene. IT manual operation and maintenance cost are greatly reduced. The stability and reliability of deployment are enhanced. A simple and convenient manner is provided to establish a public cloud virtual machine cluster. Free resources in the cluster are timely processed, so that the utilization rate of resources is increased, and cost is effectively controlled. An economic and efficient scheme shared by files between the public cloud virtual machine clusters is provided. Therefore, file sharing transmission efficiency and stability are greatly enhanced, and guarantees are provided for the rapid creation and initialization of the resources.

### Brief Description of the Drawings

The accompanying drawings described herein are used to provide a further understanding of this application, constitute a part of this application, so that other features, objectives and advantages of this application become more obvious. The exemplary embodiments of this application and the description thereof are used to explain this application, but do not constitute improper limitations to this application. In the drawings:
Fig. 1 is a schematic diagram of a cloud cost-based resource deployment system according to the disclosure.
Fig. 2 is a schematic flowchart of an automatic capacity expansion scheme according to the disclosure.
Fig. 3 is a schematic flowchart of an automatic capacity reduction scheme according to the disclosure.
Fig. 4 is a schematic diagram of a cloud cost-based resource deployment method according to the disclosure.

### Detailed Description of the Embodiments

In order to enable those skilled in the art to better understand the solutions of this application, the technical solutions in the embodiments of this application will be clearly and completely described below in combination with the drawings in the embodiments of this application. It is apparent that the described embodiments are only part of the embodiments of this application, not all the embodiments. All other embodiments obtained by those of ordinary skill in the art on the basis of the embodiments in this application without creative work shall fall within the scope of protection of this application.

It is to be noted that terms "first", "second" and the like in the description, claims and the above mentioned drawings of this application are used for distinguishing similar objects rather than describing a specific sequence or a precedence order. It should be understood that the data used in such a way may be exchanged where appropriate, in order that the embodiments of this application described here can be implemented. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

In this application, orientation or position relationships indicated by terms "upper", "lower", "left", "right", "front", "back", "top", "bottom", "inside", "outside" "in", "vertical", "horizontal", "transverse", "longitudinal" and the like are orientation or position relationships shown in the drawings. These terms are mainly used to better describe this application and its embodiments, rather than limit that the indicated devices, components and constituting parts must be in specific orientations or structured and operated in the specific orientations.

Furthermore, the above mentioned part of terms may be not only used to represent the orientation or position relationships, but used to represent other meanings, for example, term "on" may be used to represent certain relationship of dependence or connection relationship in some cases. For those of ordinary skill in the art, specific meanings of these terms in this application may be understood according to a specific condition.

In addition, the term "a plurality of" shall refer to two or more than two.

It is to be noted that the embodiments in this application and the features in the embodiments may be combined with one another without conflict. The disclosure will now be described below in detail with reference to the drawings and the embodiments.

### Embodiment I

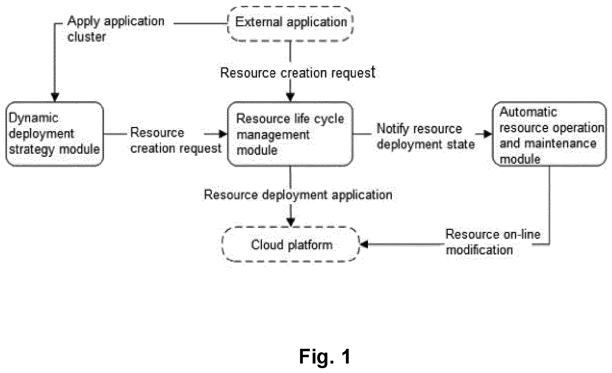

Embodiment I of the disclosure provides a cloud cost-based resource deployment system. As shown in Fig. 1, the system includes a resource life cycle management module, an automatic resource operation and maintenance module, and a dynamic deployment strategy module. The dynamic deployment strategy module automatically analyzes and combines resource deployment schemes according to requirements inputted by an external application. Based on the resource life cycle management module, deployment is implemented. The resource life cycle management module docks with API of various public clouds and internally provides standardized and unified interfaces. According to the resource deployment schemes provided by the dynamic deployment strategy module, the creation, state synchronization and deletion of resources are realized in a manner of resource arrangement. The automatic resource operation and maintenance module modifies the resources in real time through the public cloud API and a manner of remotely connecting infrastructure resources.

During specific implementation, the dynamic deployment strategy module is an upper application layer module of the resource life cycle management module, docks with a specific internal service sub-module, and provides a simple and abstract interface for the internal service sub-module. According to a CPU, a memory requirement and a specified computing type of a public cloud virtual machine proposed by an external application, the computing type during specific implementation includes a compute-intensive type, an IO-intensive type, and a data-intensive type. A required model and a corresponding quantity are analyzed according to model list information provided by a public cloud obtained regularly and synchronously.

A dynamic deployment strategy of the dynamic deployment strategy module includes implementing an automatic capacity expansion strategy or an automatic capacity reduction strategy according to telescoping requirements of an application public cloud virtual machine cluster, such as an SPARK cluster. By means of the dynamic deployment strategy, the utilization rate of a resource is maximized, and a relatively low cost is maintained.

The automatic capacity expansion strategy of the dynamic deployment strategy module includes: receiving, by the dynamic deployment strategy module, an input resource application request, proposing a resource deployment scheme according to the request, calculating a node model required to be increased and a corresponding quantity, implementing infrastructure creation by using the resource life cycle management module, and completing cluster expansion by means of the automatic resource operation and maintenance module.

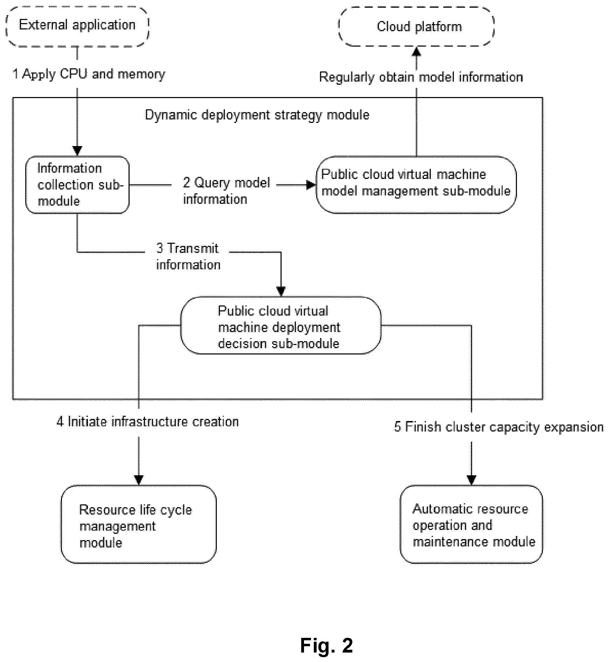

In a specific embodiment of automatic capacity expansion in the disclosure, as shown in Fig. 2, an automatic capacity expansion sub-module involved in the dynamic deployment strategy module includes an information collection sub-module, a public cloud virtual machine management sub-module, and a public cloud virtual machine deployment decision sub-module. On the one hand, the information collection sub-module docks with the external application to receive a CPU and a memory request from the external application. On the other hand, the information collection sub-module docks with the public cloud virtual machine management sub-module to query model information of a public cloud virtual machine. The public cloud virtual machine management sub-module docks with a cloud platform, to regularly and synchronously obtain model list information provided by a public cloud. The public cloud virtual machine deployment decision sub-module receives messages transmitted by the information collection sub-module, and automatically analyzes the required model and corresponding quantity by combining the model list information provided by the public cloud. Infrastructure creation is initiated by the resource life cycle management module. Cluster expansion is completed by using the automatic resource operation and maintenance module.

The automatic capacity reduction strategy of the dynamic deployment strategy module includes: regularly scanning, by the dynamic deployment strategy module, a free resource, determining deletion time of the public cloud virtual machine by monitoring specific indexes of a public cloud virtual machine cluster, to timely release a resource related to the public cloud virtual machine. During specific implementation, an application terminal can immediately submit a computing task to start computing after resource expansion is finished. After the task is completed, the dynamic deployment strategy module releases corresponding resources according to the automatic capacity reduction strategy, so as to maximize the utilization rate of the resources.

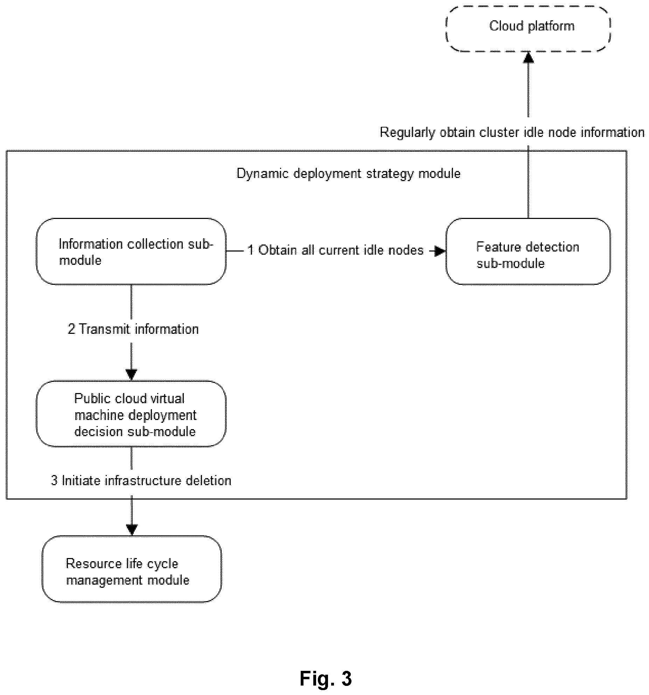

In a specific embodiment of automatic capacity reduction in the disclosure, as shown in Fig. 3, an automatic capacity reduction sub-module involved in the dynamic deployment strategy module includes an information collection sub-module, a feature detection sub-module, and a public cloud virtual machine deployment decision sub-module. The feature detection sub-module regularly obtains idle node information of a public cloud virtual machine cluster of the cloud platform. The information collection sub-module monitors specific indexes of the public cloud virtual machine cluster by using the feature detection sub-module. The automatic capacity reduction strategy decides the deletion time of a public cloud virtual machine to issue an infrastructure deletion instruction to the resource life cycle management module, so as to timely release a free public cloud virtual machine resource. In this way, resource reduction is completed, the utilization rate of the resource is increased, and a cost is effectively controlled.

In one specific embodiment of the disclosure, in Kyligence Cloud, the dynamic deployment strategy module is responsible for receiving a resource application request issued by Kyligence Enterprise. According to a quantity of CPU cores and memory sizes provided in the request, node models and quantities required to be newly increased by the SPARK cluster are calculated. Then, deployment is implemented, and new nodes are added into the SPARK cluster for operating a computing task. After the computing task is completed, corresponding idle nodes are removed from the SPARK cluster, and corresponding node resources are released on a cloud platform side.

As an intermediate layer between cloud infrastructures and the resource deployment system, the resource life cycle management module takes various resources provided by a public cloud as a minimum management unit, to explicitly or implicitly realize a dependence relationship between the various resources, so as to safely and orderly create and delete the required resource. A specified resource deployment requirement is taken as an input. An entire set of infrastructures is stored in the resource deployment system in a form of code and configuration, to form the reuse of the deployment scheme.

During specific implementation, the resource life cycle management module invokes an API for creating a resource at a resource level of a cloud platform, independently tracks states of various resources, and continuously processes the follow-up resources in case of ensuring that a dependent resource has been successfully created, and therefore, the creation of an entire set of infrastructures is finally completed.

During the operation of infrastructure resources, there is often a need to modify these resources in batches, especially the environment initialization of the public cloud virtual machine and the configuration management of operation services on the public cloud virtual machine. The automatic resource operation and maintenance module classifies various service requirements, implements reentrant logic units, and uses the corresponding logic units for resources in different roles, so as to realize real-time modification and environment deployment of the resources.

During specific implementation, the automatic resource operation and maintenance module utilizes an internal network of the public cloud to perform document transmission based on public cloud object storage, so that a file sharing mechanism between the public cloud virtual machines is realized, and the downloading speed and stability of shared files are obviously enhanced.

### Embodiment II

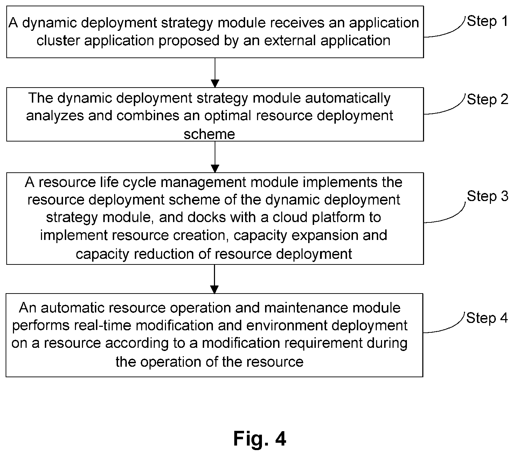

Embodiment II of the disclosure provides a cloud cost-based resource deployment method. The method is applied to the above cloud computing-based adaptive storage layering system. As shown in Fig. 4, the method includes the following steps.

At step 1, a dynamic deployment strategy module receives an application cluster application proposed by an external application.

During specific implementation, the external application provides required CPU and memory requirements of a public cloud virtual machine cluster. A computing type is formulated, including a compute-intensive type, an IO-intensive type, and a data-intensive type.

At step 2, the dynamic deployment strategy module automatically analyzes and combines a resource deployment scheme according to the requirements of step 1.

During specific implementation, the dynamic deployment strategy module combines the inputted requirements and regularly and synchronously obtained model list information provided by a public cloud, to automatically analyze a resource deployment scheme: required public cloud virtual machine models and corresponding quantities. According to an automatic capacity expansion strategy and an automatic capacity reduction strategy of an automatic telescoping mechanism, the resources requirements are met, and the utilization rate of the resources are maximized, so as to maintain operation with a low cost.

At step 3, a resource life cycle management module implements the resource deployment scheme of the dynamic deployment strategy module, and docks with a cloud platform to implement resource creation, capacity expansion and capacity reduction of resource deployment.

During specific implementation, various resources provided by the public cloud are taken as a minimum management unit, to explicitly or implicitly realize a dependence relationship between the various resources, so as to safely and orderly create and delete the required resource. A specified resource deployment requirement is taken as an input. An entire set of infrastructures is stored in the resource deployment system in a form of code and configuration, to form the reuse of the deployment scheme. The resource life cycle management module invokes an API for creating a resource at a resource level of a cloud platform, independently tracks states of various resources, and continuously processes the follow-up resources in case of ensuring that a dependent resource has been successfully created.

At step 4, an automatic resource operation and maintenance module performs real-time modification and environment deployment on a resource according to a modification requirement during the operation of the resource.

### Embodiment III

Embodiment III of the disclosure provides a cloud cost-based resource deployment method. The method includes the following operations.

A resource deployment scheme is automatically analyzed and combined according to a requirement inputted by an external application.

Based on the resource deployment scheme, the creation, state synchronization and deletion of a public cloud service provider resource is implemented in a manner of resource arrangement.

In an embodiment, the method further includes the following operation.

The resource is modified in real time through public cloud API and a manner of remotely connecting to infrastructure resources.

In an embodiment, the operation of automatically analyzing and combining the resource deployment scheme according to the requirement inputted by the external application includes the following operations.

The requirement inputted by the application is received, and includes any one or more of CPU and memory requirements.

The requirement is calculated based on a specified computing type to obtain the resource deployment scheme. The resource deployment scheme includes a model and a corresponding quantity corresponding to the requirement.

In an embodiment, free resources are regularly scanned, deletion time of a public cloud virtual machine is determined by monitoring specific indexes of a public cloud virtual machine cluster, to timely release a resource related to the public cloud virtual machine.

In an embodiment, the resource deployment scheme is proposed according to a request, and a node model required to be newly added and a corresponding quantity are calculated.

Infrastructure creation is implemented based on the node model and the corresponding quantity. Cluster expansion is completed by using an automatic resource operation and maintenance module.

Through Embodiment III of the disclosure, by directly docking with the API of various public clouds and internally providing standardized and unified interfaces, the creation, state synchronization and deletion of resources are realized in a manner of resource arrangement. Resource arrangement takes various resources provided by the public clouds as a minimum management unit, a dependence relationship between the various resources may be explicitly and implicitly realized, to safely and orderly create and delete required resources. A specific resource deployment requirement is taken as an input. An entire set of infrastructures is stored in the system in a form of code and configuration, to form the reuse of the deployment scheme. At a phase of creating required infrastructures, API for creating resources are respectively invokes at a resource level of a cloud platform. States of various resources are independently tracked. The follow-up resources are continuously processed only in case of ensuring that a dependent resource has been successfully created.

In addition, during the operation of the infrastructure resources, there is often a need to modify these resources in batches, especially the environment initialization of VM and the configuration management of operation services on VM. The resources are modified in real time through public cloud API and a manner of remotely connecting to an infrastructure resource. Various service requirements are classified, and reentrant logic units are realized. The corresponding logic units for resources in different roles are used, to realize real-time modification and environment deployment of the resources. In addition, based on public cloud object storage, a file sharing mechanism between a set of VM is realized. Internal networks of the public clouds are fully used as file transmission, so that the downloading speed and stability of shared files are obviously enhanced.

Simpler and abstract interfaces are provided for a service system. Then, according to transmitted parameters, an optimal resource deployment scheme is automatically analyzed and combined, so as to implement deployment. A dynamic strategy is an automatic telescoping mechanism based on a conventional application VM cluster, such as an SPARK cluster, having telescoping requirements. The advantages of the dynamic strategy are that the utilization rate of resources can be maximized and a relatively low cost can be maintained. After CPU and memory requirements providing required VM are applied and a computing type (a compute-intensive type, an IO-intensive type, and a data-intensive type) is assigned, optimal models and corresponding quantities are automatically analyzed by using regularly and synchronously obtained model list information provided by the public clouds. Infrastructures, such as VM, are deployed. Therefore, the capacity expansion of the cluster is finally completed.

An application terminal can immediately submit a computing task to start computing after resource expansion is completed. After the task is finished, free resources are regularly scanned. Deletion time of VM can be determined by monitoring the specific metrics of the VM cluster, to timely release related VM resources, thereby maximizing the utilization rate of the resources. In Kyligence Cloud, a resource application request issued by Kyligence Enterprise is received. According to a quantity of CPU cores and memory sizes provided in the request, node models and quantities required to be newly increased by the SPARK cluster are calculated. Then, deployment is implemented, and new nodes are added into the SPARK cluster for operating a computing task. After the computing task is completed, corresponding idle nodes are removed from the SPARK cluster, and corresponding node resources are released on a cloud platform side.

### Embodiment IV

Embodiment IV of the disclosure provides a cloud cost-based resource deployment device. The device includes a dynamic deployment strategy module and a resource life cycle management module.

The dynamic deployment strategy module is configured to automatically analyze and combine a resource deployment scheme according to a requirement inputted by an external application.

The resource life cycle management module is configured to realize the creation, state synchronization and deletion of a public cloud service provider resource in a manner of resource arrangement based on the resource deployment scheme.

### Embodiment V

Embodiment V of the disclosure provides a readable storage medium. The readable storage medium stores a computer program. The method possibly designed in various aspects of the disclosure is implemented when the computer program is performed by a processor.

### Embodiment VI

Embodiment VI of the disclosure provides an electronic device. The electronic device includes at least one processor and a memorizer in communication connection with the at least one processor. The memorizer stores a computer program capable of being performed by the at least one processor. The computer program is performed by the at least one processor, to cause the at least one processor to perform the method possibly designed in various aspects of the disclosure.

During specific implementation, resources are modified in real time through public cloud API and a manner of remotely connecting to an infrastructure resource. Various service requirements are classified, and reentrant logic units are realized. The corresponding logic units for resources in different roles are used, to realize real-time modification and environment deployment of the resources.

The above are only the preferred embodiments of this application and are not intended to limit this application. For those skilled in the art, this application may have various modifications and variations. Any modifications, equivalent replacements, improvements and the like made within the spirit and principle of this application shall fall within the scope of protection of this application.

## Claims

1. A cloud cost-based resource deployment system, comprising a resource life cycle management module, an automatic resource operation and maintenance module, and a dynamic deployment strategy module, wherein the dynamic deployment strategy module automatically analyzes and combines resource deployment schemes according to requirements inputted by an external application, based on the resource life cycle management module, deployment is implemented, the resource life cycle management module docks with Application Program Interfaces (APIs) of various public clouds and internally provides standardized and unified interfaces, according to the resource deployment schemes provided by the dynamic deployment strategy module, the creation, state synchronization and deletion of resources are realized in a manner of resource arrangement, and the automatic resource operation and maintenance module modifies the resources in real time through the public cloud API and a manner of remotely connecting to infrastructure resources.

2. The cloud cost-based resource deployment system as claimed in claim 1, wherein after the dynamic deployment strategy module receives a Central Processing Unit (CPU), memory requirements and a specified computing type of a public cloud virtual machine proposed by the external application, a required model and a corresponding quantity are analyzed according to model list information provided by a public cloud obtained regularly and synchronously.

3. The cloud cost-based resource deployment system as claimed in claim 1, wherein a dynamic deployment strategy of the dynamic deployment strategy module comprises implementing an automatic capacity expansion strategy or an automatic capacity reduction strategy according to telescoping requirements of an application public cloud virtual machine cluster.

4. The cloud cost-based resource deployment system as claimed in claim 1, wherein the automatic capacity expansion strategy of the dynamic deployment strategy module comprises: receiving, by the dynamic deployment strategy module, an input resource application request, proposing a resource deployment scheme according to the request, calculating a node model required to be increased and a corresponding quantity, implementing infrastructure creation by using the resource life cycle management module, and completing cluster expansion by means of the automatic resource operation and maintenance module.

5. The cloud cost-based resource deployment system as claimed in claim 1, wherein the automatic capacity reduction strategy of the dynamic deployment strategy module comprises: regularly scanning, by the dynamic deployment strategy module, a free resource, determining deletion time of the public cloud virtual machine by monitoring specific indexes of a public cloud virtual machine cluster, and timely releasing a resource related to the public cloud virtual machine.

6. The cloud cost-based resource deployment system as claimed in claim 1, wherein the resource life cycle management module takes various resources provided by a public cloud as a minimum management unit, to explicitly or implicitly realize a dependence relationship between the various resources, so as to safely and orderly create and delete the required resource, a specified resource deployment requirement is taken as an input, and an entire set of infrastructures is stored in the resource deployment system in a form of code and configuration, to form the reuse of the deployment scheme.

7. The cloud cost-based resource deployment system as claimed in claim 1, wherein the resource life cycle management module invokes an API for creating a resource at a resource level of a cloud platform, independently tracks states of various resources, and continuously processes the follow-up resources in case of ensuring that a dependent resource has been successfully created.

8. The cloud cost-based resource deployment system as claimed in claim 1, wherein the automatic resource operation and maintenance module classifies various service requirements, implements reentrant logic units, and uses the corresponding logic units for resources in different roles, so as to realize real-time modification and environment deployment of the resources.

9. The cloud cost-based resource deployment system as claimed in claim 1, wherein automatic resource operation and maintenance module utilizes an internal network of the public cloud to perform document transmission based on public cloud object storage.

10. A cloud cost-based resource deployment method, wherein the method is applied to the cloud cost-based resource deployment system as claimed in any claims 1 to 9, and comprises:
step 1, proposing, by an external application, an application cluster application to a dynamic deployment strategy module;
step 2, automatically analyzing and combining a resource deployment scheme, by the dynamic deployment strategy module, according to a requirement of step 1;
step 3, implementing, by a resource life cycle management module, the resource deployment scheme of the dynamic deployment strategy module, and docking with a cloud platform to implement resource creation, capacity expansion and capacity reduction of resource deployment; and
step 4, performing, by an automatic resource operation and maintenance module, real-time modification and environment deployment on a resource according to a modification requirement during the operation of the resource.

11. A cloud cost-based resource deployment method, comprising:
automatically analyzing and combining a resource deployment scheme according to a requirement inputted by an external application; and
realizing the creation, state synchronization and deletion of a public cloud service provider resource in a manner of resource arrangement based on the resource deployment scheme.

12. The cloud cost-based resource deployment method as claimed in claim 11, wherein, the method comprises:
modifying the resource in real time through public cloud API and a manner of remotely connecting to an infrastructure resource.

13. The cloud cost-based resource deployment method as claimed in claim 11, wherein that automatically analyzing and combining the resource deployment scheme according to the requirement inputted by the external application comprises:
receiving the requirement inputted by the application, the requirement comprising any one or more of CPU and memory requirements; and
calculating the requirement based on a specified computing type to obtain the resource deployment scheme, the resource deployment scheme comprising a model and a corresponding quantity corresponding to the requirement.

14. The cloud cost-based resource deployment method as claimed in claim 11, wherein
regularly scanning a free resource, determining deletion time of a public cloud virtual machine by monitoring specific indexes of a public cloud virtual machine cluster, to timely release a resource related to the public cloud virtual machine.

15. The cloud cost-based resource deployment method as claimed in claim 11, wherein
proposing the resource deployment scheme according to a request, and calculating a node model required to be added and a corresponding quantity; and
implementing infrastructure creation based on the node model and the corresponding quantity, and completing cluster expansion by using an automatic resource operation and maintenance module.

16. A cloud cost-based resource deployment device, comprising:
a dynamic deployment strategy module, configured to automatically analyze and combine a resource deployment scheme according to a requirement inputted by an external application; and
a resource life cycle management module, configured to realize the creation, state synchronization and deletion of a public cloud service provider resource in a manner of resource arrangement based on the resource deployment scheme.
16. A readable storage medium, wherein the readable storage medium stores a computer program, and the method as claimed in any claims 10 to 15 is implemented when the computer program is performed by a processor.

17. An electronic device, comprising at least one processor and a memorizer in communication connection with the at least one processor, wherein the memorizer stores a computer program capable of being performed by the at least one processor, and the computer program is performed by the at least one processor, to cause the at least one processor to perform the method as claimed in any claims 10 to 15.
